# EUROPEAN PATENT APPLICATION

(11) **EP 3 763 207 A1**
(43) Date of publication of application: **13.01.2021**
(21) Application number: 19775113.4
(22) Date of filing: 05.03.2019
(51) Int. Cl.: A01K 47/06

(54) **STRIP CONTAINING ACARICIDE**

(30) Priority: 27.03.2018 ES 201800231 U
(71) Applicant: Chicon Carnero, José Paulino, 29190 Puerto de La Torre Málaga (ES)
(72) Inventor: Chicon Carnero, José Paulino, 29190 Puerto de La Torre Málaga (ES)
(74) Representative: Espiell Gomez, Ignacio
(86) International application number: PCT/ES2019/000021
(87) International publication number: WO 2019/185953

(57) **Abstract**

The invention relates to a strip containing acaricide, which is made up of a plurality of compartments, placed in parallel and connected to one another, which serve to house an acaricide substance, in semi-solid state, characterised in that the tube-shaped compartments are square, rectangular, cylindrical, hexagonal or of any other geometric shape on the inside, and the inlet is open at both ends, the smaller inlet having an opening of 5 mm; an acaricide substance which acts by contact is deposited inside of same; the containing strip has a length of 10 mm to 500 mm, a width of 10 mm to 400 mm, and a height of 1 mm to 5 mm, all inclusive.

## Description

### TECHNICAL SECTOR

This invention pertains to the veterinary medicine sector, and more concretely to the fight against the varroa, varroosis disease that the bees suffers.

### BACKGROUND OF THE INVENTION

At this conjunctural moment, the life of bees depends on the products and on in which way there are applied, also the vegetation on the earth depends on the work of the bees.

Products exist for treating the varroa, that reflect the state-of-the-art, veterinary medicines are stated below at their trade name and registration number by the Spanish Medicines and Health Products Agency (AEMPS).

Trade name, Apivar, registration number of the AEMPS 1283; trade name, Apitraz 500 mg, registration number of the AEMPS 2782; trade name, Amicel, registration number of the AEMPS 3157; they are applied with the pharmaceutical form, plastic strips, and the active principle is, Amitraz. Trade name, Apistan, registration number of the AEMPS 2680, it is applied with plastic strips, the active principle is Fluvalinate. Trade name, Checkmite, registration number of the AEMPS 2737, it is applied with plastic strips, the active principle is Coumaphos.

Trade name, Bayvarol 3,6 mg, registration number of the AEM PS 1713;
Trade name, Polyvar 275 mg, registration number of the AEMPS 3526; they are applied with plastic strips, the active principle is Flumethrin. The plastic strips with these products are placed within the hive, between the honeycombs where the bees show more activity, these active principles are applied providing the greatest contact of the substances with the bees, and as these latter handle and order everything within the hive, they become impregnated themselves, receiving a strong chemical load, and the product extracted from the hive becoming contaminated.

The strip containing acaricide, object of this invention, is designed to overcome this situation, preventing the contact of the bees with the acaricide substances.
Trade name, Apiguard, registration number of the AEMPS 1487; trade name, Thymobar, registration number of the AEMPS 1962; the active principle is, Thymol.

Trade name, MAQS formic acid 68.2 mg, the 3031 registration number of the AEMPS 3031; trade name, Ecoxal, registration number of the AEMPS 1749; trade name, Varromed, registration number of the European Medicines Agency EU/2/16/203/001002; the active principles are formic acid and oxalic acid, and they are applied with contact and by steam.

The acids directly applied are very aggressive.

Normally bees are treated as if they were invulnerable, when actually they have some parts of their anatomy very fragile; such as the wings and the air pockets with which they are provided to be more livid in flight, and necessary to carry all that they collect, also the wax glands with which they produce wax, the sense of smell and the orientation, therefore, direct contact with the acids is very harmful.

After having all these products and using them, the varroa is still every time having increased virulence.

The containing strip, with an injected acaricide comes into being, in order that the varroa is, what it was during several decades, a parasite that coexists in harmony with the bees.

### EXPLANATION OF THE INVENTION

The object of this invention is a new containing strip, provided with a variety of compartments and designed to house an acaricide substance and remove the mites without causing harm to the bees, nor contaminating the products extracted from the hive.

The tube-shaped compartments, placed on a same plan in parallel, crosswise of the length of the containing strip, the said compartments on their internal part will be tube-shaped: square, rectangular, cylindrical, hexagonal, or any other geometrical shape, and they can have the inlet open by the two ends, with an inlet passage of less than five millimeters, in order that the bees cannot come in and the mites can, within the compartments, an acaricide substance is deposited in a semi-solid state, that acts by contact, therefore no contact bee-acaricide occurs and they are free from suffering harm and intoxications, also the honey, the pollen and the rest of products extracted from the hive appear not to be contaminated.

The strip containing acaricide will have sizes ranging from 10mm to 500mm long, from 10mm to 400mm wide, between 1mm and 5mm high, the said limits included.

The strip containing acaricide, is devised for permitted acaricide substances and that it would be suitable to apply them in this way, the substance disclosed in a preferred embodiment of this invention and the substances that are still to come and that would be suitable to apply in this way.

Preferably in this invention, the substance is an organic acaricide composed of oxalic acid with a molecular weight 126,07, from 2% to 20%, distilled water from 2% to 20%, stringy vaseline from 60% to 96%, the said limits included, with respect to the total weight of the said composition, and it is mixed so that the sum of the three components is 100%; step a) the stringy vaseline is heated until it becomes liquid, step b) the distilled water is mixed with the oxalic acid, at room temperature, step c) the mixture of the step b) is added to the vaseline of the step a) that remains liquid and mixing, then it is injected in the compartments of the containing strip and it is adhered to the walls of the compartments and adopts a semi-solid texture.

Preferably, in this invention, the compartments that compose the containing strip, on their internal part will be tube-shaped: square, rectangular, cylindrical, hexagonal, or any other geometrical shape, with the inlet open by one end, with inlet passage of less than 5 mm, and the inlet closed by the other end.

Preferably, in this invention, the containing strip, will have sizes ranging from 200 mm to 440 mm long, from 20 mm to 70 mm wide, from 2 mm to 4,5 mm high, the said limits included.

This Utility Model, comes to overcome the situation of disease that the bees are suffering since decades ago and that lately is unbearable, because of the mites.

### SHORT DESCRIPTION OF THE DRAWINGS

To complement the description that is been carried out and in order to assist to best understanding the characteristics of the invention, as an integral part of the said description, a set of drawings is attached, where for illustration and not for limitation purpose the following has been represented:

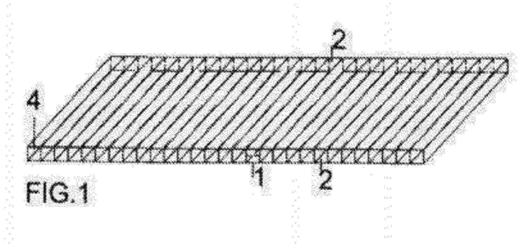

Figure 1 corresponds to a view in perspective of the containing strip, according to the characteristics of the invention, wherein the compartments composing it are square tube-shaped (4), and the inlet is open by the two ends (2). The strokes indicated by the numeral (1) show the inlet passage.
Figure 2 corresponds to a view in perspective of the containing strip, according preferably to the characteristics of this invention, wherein the square tube-shaped compartments (4), have an open inlet (2), that can be seen at the proximal part of the strip, and indicated by the numeral (2), and the other closed end (3), that appears covered by the strip itself, located at the distal part, and indicated by the numeral (3), and with dashed strokes.

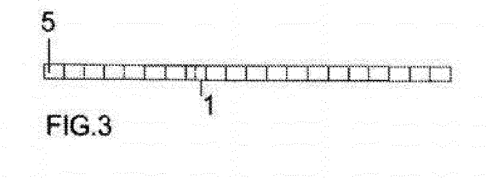

Figure 3 corresponds to a front view of the strip, according to the characteristics of the invention, wherein the inlet to compartments (5), having a rectangular shape, can be seen.

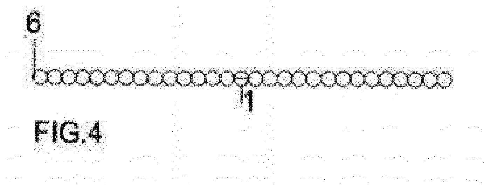

Figure 4 corresponds to a front view of the strip, according to the characteristics of the invention, wherein the inlet to the compartments (6), having a cylindrical shape, can be seen.

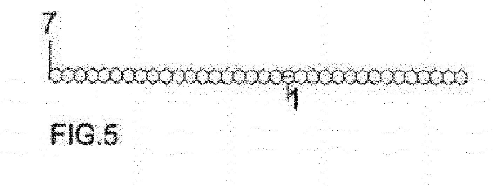

Figure 5 corresponds to a front view of the strip, according to the characteristics of the invention, wherein the inlet to the compartments (7), having a hexagonal shape, can be seen.

### PREFERRED EMBODIMENT OF THE INVENTION

For example, purpose, a case of practical embodiment of the containing strip, object of this Utility Model is represented.

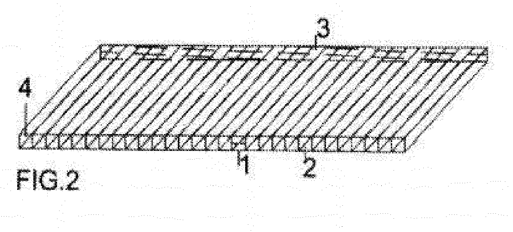

The Figure 2 shows with a view in perspective the containing strip with its square-tube-shaped compartments (4), with the open inlet of an end (2), and the closed inlet of the other end (3), in these compartments, an acaricide substance in semi-solid state is deposited, composed of: distilled water, oxalic acid, and vaseline, within the hive, two units of the containing strip are placed, one on each side of the breeding chamber. The mites have an easy access to these compartments, impregnated with the acaricide, the bees cannot come into the square-tube-shaped compartments, because the inlet passage (1) is less than 5 mm.

### INDUSTRIAL APPLICATION

The containing strip, object of this Utility Model, will be made of the suitable materials such as: low density polyethylene, or cellular polypropylene.

The acaricide substance in semi-solid state, will be placed within the compartments in a way suitable to the characteristics of the invention, or by mechanized injection.

## Claims

1. The strip containing acaricide, is formed by a variety of compartments, placed in parallel and joined to each other, that serve to house an acaricide substance, in semi-solid state, **characterized in that** the tube-shaped compartments, by their internal part will be: square (4), rectangular (5), cylindrical (6), hexagonal (7), or any other geometrical shape and the inlet open at both ends (2), the inlet passage (1) less than 5 mm, within it an acaricide substance is deposited, that acts by contact, the sizes of the containing strip are ranging from 10 mm to 500 mm long, from 10 mm to 400 mm, wide, from 1 mm and 5 mm high, the said limits included.

2. The strip containing acaricide according to the claim 1, **characterized in that** in a preferred form of this invention, the tube-shaped compartments composing the containing strip, by their internal part will have any geometrical shape, with the open inlet at one end (2) with inlet passage (1) of less than 5 mm, and the closed inlet at the other end (3).

3. The strip containing acaricide according to the claim 1 y 2, **characterized in that** in a preferred embodiment of this invention, the sizes of the containing strips are ranging from 200 mm to 440 mm long, from 20 mm to 70 mm wide, from 2 mm to 4,5 mm high, the said limits included.

4. The strip containing acaricide according to the claims 1 to 3, **characterized in that** in a preferred embodiment of the invention, the substance that is deposited within it, is an organic acaricide the composition of which is as follows: oxalic acid having a molecular weight 126.07, from 2% and 20% of weight, distilled water from 2% and 20% of weight, stringy vaseline from 60% to 96% in weight, the said limits included, with respect to the total mass of the composition.
